(19) **Europäisches Patentamt / European Patent Office / Office européen des brevets**

(11) **EP 1 847 366 B1**

(12) **EUROPEAN PATENT SPECIFICATION**

(45) Date of publication and mention
of the grant of the patent:
**10.11.2010 Bulletin 2010/45**

(51) Int Cl.:
**B28B 13/02** *(2006.01)* **B65G 65/42** *(2006.01)*

(21) Application number: **07007870.4**

(22) Date of filing: **18.04.2007**

(54) **Method for manufacturing a honeycomb structure**

Verfahren zur Herstellung einer Wabenstruktur

Procédé pour la fabrication d'une structure en nid d'abeilles

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.04.2006 PCT/JP2006/308353**

(43) Date of publication of application:
**24.10.2007 Bulletin 2007/43**

(73) Proprietor: **IBIDEN CO., LTD.**
**Ogaki-shi**
**Gifu 503-8604 (JP)**

(72) Inventors:
• **Naruse, Kazuya**
**c/o Ibiden DPF France S.A.S.**
**45320 Courtenay (FR)**

• **Sumiya, Eiji**
**c/o Ibiden Co., Ltd.**
**Ibi-gun**
**Gifu 501-0695 (JP)**
• **Tajima, Kosei**
**c/o Ibiden Co., Ltd.**
**Ibi-gun**
**Gifu 501-0695 (JP)**

(74) Representative: **HOFFMANN EITLE**
**Patent- und Rechtsanwälte**
**Arabellastrasse 4**
**81925 München (DE)**

(56) References cited:
EP-A- 1 803 666 WO-A-01/70487
US-A- 4 164 597 US-A1- 2002 162 853

**Description**

TECHNICAL FIELD

The present invention relates to a method for manufacturing a honeycomb structure.

BACKGROUND ART

Harm to the environment and the human body caused by particulates such as soot contained in exhaust gas discharged from the internal combustion engines of buses, trucks and other vehicles, construction equipment and the like has recently become a problem. For that reason, there have been currently proposed numerous kinds of honeycomb filters using honeycomb structures of porous ceramic as filters for capturing particulates contained in exhaust gas, thereby purifying the exhaust gas.

Conventionally, when manufacturing a honeycomb structure, first, for example, a ceramic powder, a binder, and a liquid dispersing medium and the like are mixed together to prepare a wet mixture. The wet mixture is then extrusion molded continuously by using a die, and the extruded molded body is cut to a prescribed length to produce a rectangular pillar-shaped honeycomb molded body.

Next, the honeycomb molded body obtained above is dried using microwave drying or hot-air drying, and afterward, prescribed cells are sealed to achieve a sealed state of the cells in which either end of the cells are sealed by the plug material layer. After the sealed state has been achieved, degreasing and firing treatments are carried out, thus producing the honeycomb fired body.

After this, a sealing material paste is applied onto the side faces of the honeycomb fired body, and honeycomb fired bodies are adhered together to prepare an aggregate of honeycomb fired bodies in which a multitude of honeycomb fired bodies are bonded together by interposing a sealing material layer (an adhesive layer). Cutting process is then carried out to obtain a ceramic block using a cutting machine or the like and cutting the obtained aggregate of honeycomb fired bodies into a prescribed form, such as cylindrical or cylindroid form and the like. Finally, sealing material paste is applied on the periphery of the ceramic block to form a sealing material layer (a coat layer), thus completing the manufacturing of the honeycomb structure.

In such a manufacturing method, after the wet mixture has been prepared, it is necessary to convey this wet mixture via a conveyer apparatus to an extrusion molding apparatus of the next process.

For instance, an example of a conveyer apparatus configured to convey a wet mixture is disclosed in Patent Documents 1 and 2.

Patent Document 1: JP-A 2002-255353
Patent Document 2: JP-A 5-131432

US 2002/0162 853 A1 discloses a method for manufacturing a honeycomb structure according to the pre-amble of claim 1 and uses an apparatus for supplying raw materials at constant amounts having a raw material tank for storing and feeding raw materials, a belt for transferring raw materials, a level control guide for defining a thickness of raw materials on the belt, and a belt cover, which can supply at constant amounts wet raw materials used when ceramic honeycomb materials are extruded. A part of or an overall part of the belt cover is made transparent so that is possible to grasp at once the raw material supplying states.

US 4164597 discloses a method and apparatus for mixing particulate materials, to form a concrete mix, and for mixing water with the concrete mix to form concrete. A controlled amount of aggregate is placed on a moving belt and levelled to further control its amount, and then the materials on the belt are mixed and water is added to form the concrete.

EP 1803666 discloses a transporting apparatus and method for manufacturing a honeycomb structured body. The apparatus is provided with a casing having a lid which covers the entire periphery of a belt conveyor so as to produce a tightly sealed state. With this structure the transporting process can be carried out with the moisture content of the wet mixture being maintained in a fixed state.

DISCLOSURE OF THE INVENTION

PROBLEMS TO BE SOLVED BY THE INVENTION

However, conventionally used conveyer apparatuses were not designed with an attention to a possible change in the moisture content of the wet mixture in the conveyance process.

Also, in cases in which a storage portion for storing wet mixture is disposed at a part of the conveyer apparatus, variance occurred in the period of time from the charge of the wet mixture into the conveyer apparatus to the discharge of the same wet mixture into the following process.

Under these conditions, even if the wet mixtures charged into the conveyer apparatus are the ones prepared with a uniform moisture content, variance in the moisture content of the wet mixtures discharged from the conveyer apparatus occurs due to factors such as drying over time, as well as changes in temperature and humidity, which thereby gave rise to the problem of being impossible to supply a wet mixture of a constant degree of quality to the subsequent processes.

In particular, although it is necessary to supply a wet mixture having an appropriate moisture content to the extrusion molding apparatus in the production of a honeycomb structure, it is easy for the moisture content to become less than the appropriate amount when such a wet mixture is used, resulting in defects such as the surface of the extrusion molded body becoming parched (i.e. the surface having a low moisture and being dry), the occurrence of cracks, the occurrence of holes or fissures on portions of cell wall, and the occurrence of the so-called 'cell cut-off' state in which continuous portions of cell wall are left unformed.

Alternately, if the moisture content exceeds the appropriate amount, it becomes difficult to maintain a constant shape of the molded body until the extruded molded body is dried, giving rise to defects such as the occurrence of warpage in the honeycomb fired body.

The present invention has been devised for the purpose of solving these problems. It is an object of the present disclosure presently not claimed to provide a conveyer apparatus which enables a small rate of moisture content change of the wet mixture between before and after the conveyance process and enables to supply the wet mixture with a constant quality for the following process. It is also an object of the disclosure presently not claimed, particularly in cases used in production of a honeycomb structure, to provide a conveyer apparatus able to prevent cracks and cell cut-off from occurring in extrusion molded bodies, and a method for manufacturing a honeycomb structure in which cracks and cell cut-off do not occur in extrusion molded bodies extruded in the extrusion molding process.

MEANS FOR SOLVING THE PROBLEMS

More specifically, the conveyer apparatus of the present disclosure comprises a conveyer portion having disposed therein a conveyer configured to convey a wet mixture;
wherein
rate of moisture content change of the wet mixture between before after conveyance is 3% or less.

It is preferable that the above mentioned conveyer apparatus comprise a storage portion for temporarily storing the wet mixture, and it is also preferable that the above mentioned conveyer portion be formed by a casing and a belt conveyer disposed inside of the above mentioned casing.

Also, in the above mentioned conveyer apparatus it is preferable that a partition member configured to partition off the interior of the casing is disposed near the end portion of the downstream side of the belt conveyer.

The method for manufacturing a honeycomb structure comprising a honeycomb fired body according to the present invention comprises:

carrying out a conveyance process for conveying a wet mixture containing wet mixed inorganic powders to an extrusion molding process;
preparing by extrusion molding a pillar-shaped honeycomb molded body in which a multiplicity of cells are placed in parallel with one another in the longitudinal direction with a cell wall therebetween; and
firing the honeycomb molded body,

wherein
in the conveyance process, the wet mixture is conveyed to an extrusion molding apparatus by a conveyer apparatus comprising a conveyer portion having disposed therein a conveyer configured to convey a wet mixture; and
in the conveyer apparatus the conveyer portion comprises a casing to prevent the moisture contained in the air within the casing from moving out of the casing; and a partition member configured to partition off the interior of the casing near the end portion of the downstream side of the conveyer, so that the rate of moisture content change of the wet mixture between before and after conveyance is 3% or less.

In the above mentioned method for manufacturing a honeycomb structure, it is preferable that the above mentioned conveyer apparatus further comprises:

a storage portion for temporarily storing the wet mixture.

In the above mentioned method for manufacturing a honeycomb structure, it is preferable that the conveyer portion comprises a belt conveyer disposed inside of the casing.

It is preferable that the moisture content of the above mentioned wet mixture used in the above mentioned method for manufacturing a honeycomb structure is in the range of 10 to 20% by weight after conveyance.

EFFECTS OF THE INVENTION

The conveyer apparatus of the present disclosure is able to prevent drying of the wet mixture during the conveyance process, as well as to keep the rate of moisture content change of the wet mixture between before and after conveyance to 3% or less. Because of this, it is possible to supply wet mixture of a constant degree of quality to the subsequent processes in a stable manner.
Also, in cases of using the conveyer apparatus of the present disclosure as the conveyer apparatus used before the extrusion molding process in the manufacturing processes of a honeycomb structure for example, because it is possible to supply wet mixture having a suitable moisture content to the extrusion molding apparatus in a stable manner, it is possible to prevent cracks, cell cut-off and the like from occurring in the extrusion molded body.

In particular, in the conveyer apparatus of the present disclosure, when the partition member configured to partition the interior of the casing is used near the end portion of the downstream side of the belt conveyer constituting the conveyer apparatus, it is possible to effectively prevent drying of the wet mixture inside of the conveyer apparatus while further reducing the rate of moisture content change of the wet mixture between before and after conveyance process.

Also, in the method for manufacturing a honeycomb structure according to the present invention, since it is possible to keep the rate of moisture content change of the wet mixture between before and after conveyance process to 3% or less, it is possible to supply wet mixture having a suitable moisture content to the extrusion molding apparatus in a stable manner, it is possible to prevent cracks, cell cut-off and the like from occurring in the extrusion molded body.

Also, in the method for manufacturing a honeycomb structure according to the present invention, since the moisture content of the wet mixture after conveyance is in the range of 10 to 20% by weight, it is possible to attain an extrusion molded body that has no occurrence of cracks, cell cut-off or the like, and maintains a constant shape.

BEST MODE FOR CARRYING OUT THE INVENTION

First, explanation will be given in regard to the conveyer apparatus according to the present disclosure.
The conveyer apparatus according to the present disclosure comprises a conveyer portion having disposed therein a conveyer configured to convey a wet mixture;
wherein
rate of moisture content change of the wet mixture between before and after conveyance is 3% or less.
Here, 'rate of moisture content change of the wet mixture between before and after conveyance is 3% or less' means absolute value of the rate of moisture content change of the wet mixture between before and after conveyance is 3% or less.

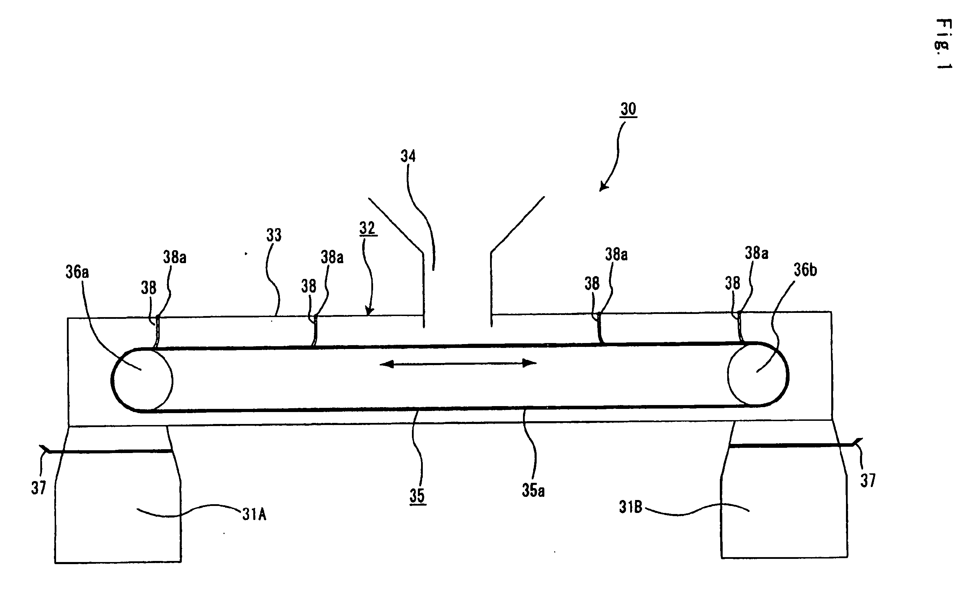

Fig. 1 is a cross sectional view schematically showing an example of the conveyer apparatus according to the present disclosure.
This conveyer apparatus 30 comprises a conveyer portion 32 configured to convey wet mixture. The conveyer portion 32 comprises a casing 33 having a charging port 34 for the purpose of charging a wet mixture, and a belt conveyer 35. In the conveyer apparatus 30, when a wet mixture prepared in a wet mixing apparatus (not shown) is charged into the conveyer portion 32 from the charging port 34, it is deposited on the belt conveyer 35 constituting the conveyer portion 32.

The conveyer apparatus 30 is constituted in such a manner that the casing 33 entirely covers the belt conveyer 35 and its surroundings and the entirety of the conveyer portion 32 can be hermetically enclosed. In this manner, with regard to the region between the interior and the exterior of the casing 33, it is possible to prevent the moisture contained in the air within the casing 33 from moving out of the casing 33.
Because of this, if a prescribed amount of moisture evaporates from the wet mixture inside of the casing 33, thereby once increasing the humidity level of inside of the casing 33, it is possible to subsequently maintain this state of a high humidity inside the casing 33.
In this manner, since the rate of evaporation of the moisture from the wet mixture inside of the casing 33 per unit time decreases by charging the wet mixture into the casing 33 while incessantly maintaining the state of high humidity inside of the casing 33, it is possible to decrease the amount of the moisture evaporating inside of the casing 33 thereby preventing the drying of the wet mixture.
Due to the above mentioned operation, since it is possible to prevent the drying of the wet mixture from occurring inside of the conveyer portion 32, it is thereby possible to conduct conveyance in such a manner that the rate of moisture content change of the wet mixture between before and after conveyance process is kept to 3% or less.
Also, it is preferable that the rate of moisture content change of the wet mixture between before and after conveyance process is lower, more preferably as close to 0% as possible.

As shown in Fig. 1, it is preferable for the conveyer portion 32 to be formed by the casing 33 and the belt conveyer 35 disposed inside of the casing 33.
Incidentally, in the conveyer apparatus 30 according to the present disclosure, the 'casing 33' includes a casing having a box-shaped member with a lid disposed thereon, and a casing pre-formed as a tube-shaped member.

Also, it is preferable that the casing 33 be a material having a low water permeability. With a material having a high water permeability, it is impossible to prevent moisture from moving between the interior and the exterior of the casing 33, making it unable to serve its purpose. Specifically, it is preferable that the material be a metal, and the kind of metal is not particularly limited.

Also, it is according to the invention to dispose a partition member 38 configured to partition off the interior of the casing 33 near the end portion of the downstream side of the belt conveyer 35. This partition member 38 is preferably installed in such a manner that its top end is able to rotate over a prescribed angle around a shaft 38a as a center which is disposed on the face of the top plate of the casing 33.

This partition member 38 is able to partition off the interior of the casing 33, and is able to thereby prevent the moisture from moving between partitioned spaces. With this, it is possible to even more narrowly partition off the space in which the wet mixture exists and thus hold the humidity level of the partitioned space high.

By holding the humidity level of the space in which the wet mixture exists high, it is possible to reduce the amount of moisture evaporating from the wet mixture and thereby even further reduce the rate of moisture content change of the wet mixture between before and after conveyance process.

Also, since the top end of the partition member 38 is able to rotate over a prescribed angle around the shaft 38a as a center which is disposed on the face of the top plate of the casing 33, when force is applied to the front end of the partition member 38 by the wet mixture moving on a belt 35a, the partition member 38 rotates slightly around the shaft 38a in the direction of movement of the belt 35a, thereby making it possible to convey the wet mixture in a state in which the end portion of the partition member 38 is in contact with the surface of the wet mixture.

If the end portion of the partition member 38 is in the state of contacting the surface of the wet mixture, since the movement of the moisture between partitioned spaces does not occur, it is possible to reduce the amount of moisture evaporating from the wet mixture while it is conveyed.

Also, although the material of the partition member 38 is not particularly limited, it is preferable that it be a material having low moisture permeability and low water absorption properties. With a material having a high moisture permeability property, it is not possible to prevent the movement of moisture between the partitioned spaces, and thus to fulfill its role. Also, with a material having a high water absorption property, since the moisture contained in the wet mixture is absorbed by the partition member 38, and the moisture content of the wet mixture thereby decreases, thus again, it does not accomplish its purpose as a partition member.

Specifically, resin materials having a low water absorption coefficient such as fluorine resin, or metal materials are preferable.

Although the thickness of the partition member 38 is not particularly limited, it is preferable to adjust the thickness, in consideration of the relationship with the water permeability of the partition member 38, to such an extent that moisture cannot permeate the partition member 38. Also, it is preferable that the partition member 38 be a material having bendability. This is because when force is applied to the partition member 38 by the wet mixture moving on the belt 35a, the front end of the partition member 38 can bend and thereby does not become a hindrance to the movement of the wet mixture, making it possible to conduct conveyance in a state in which the partition member 38 is in contact with the surface of the wet mixture.

Also, it is acceptable to dispose a plurality of the partition members 38 over the conveyance path of the wet mixture. By disposing a plurality of the partition members 38, it is possible to even more narrowly partition off spaces in which the wet mixture exists, thereby making it possible to prevent drying of the wet mixture within the partitioned spaces.

The belt conveyer 35 is constituted by a belt 35a, and rollers 36a, 36b, and can convey the wet mixture (not shown) deposited on the belt conveyer 35 in the direction of the downstream side of the belt conveyer 35 in a continuous or intermittent manner.

The material of the belt 35a is not particularly limited. Examples of the material of the belt 35a include resins such as rubber, urethane, vinyl-chloride, fluorine resin, silicone resin, and the like.

Here, as shown in Fig. 1, it is acceptable to dispose storage portions 31A, 31B on the portions at the side which is to be the downstream side when the belt conveyer 35 is in motion.

In the conveyer apparatus 30 shown in Fig. 1, since the downstream side location changes depending on the direction of rotation of the belt conveyer 35, the storage portion 31A and storage portion 31B are disposed on both end sides of the belt conveyer 35.

The storage portion 31A has on its bottom face an openable and closable discharging port. The storage portion 31A can temporarily store a given amount of wet mixture while supplying, under control, wet mixture at a constant amount per unit time from its discharging port to the apparatus of the next process, for example a process of producing a molded body by an extrusion molding apparatus.

Also, the storage portion 31A has an open/close plate 37 slidable in the left and right directions. By setting this open/close plate 37 into a closed state (the state depicted in Fig. 1), it is possible to set the storage portion 31A apart from other regions of the conveyer apparatus 30.

In this way, since it is possible to narrowly partition off the space in which the stored wet mixture exists, it is possible to prevent the drying of the wet mixture stored within the storage portion 31A. In cases in which the conveyer apparatus 30 is not working, and the supply of the wet mixture to the storage portion 31A is suspended, setting the open/close plate 37 into a closed state is effective in the prevention of drying of the wet mixture.

Also, in the conveyer apparatus 30, by reversing the direction of rotation of the rollers 36a, 36b, it is possible to convey the wet mixture deposited on the belt conveyer 35 to the storage portion 31B situated on the opposite side of the storage portion 31A in a continuous or intermittent manner, thereby storing the wet mixture in the storage portion 31B. In the same manner as in the storage portion 31A, the storage portion 31B also has on its bottom face an openable and closable discharging port, thereby making it possible to temporarily store a given amount of wet mixture while supplying, under control, wet mixture at a constant amount per unit time from its discharging port to the apparatus of the next process. In the same manner as in the storage portion 31A, the storage portion 31B also has the open/close plate 37, making it possible to prevent drying of the wet mixture in the storage portion 31B.

In this manner, since it is possible for the conveyer apparatus 30 to convey the wet mixture to both the storage portion 31A and the storage portion 31B thereby storing it, the conveyer portion 32 comprises a distribution mechanism.

Also, in cases in which the wet mixture is distributed and supplied to two extrusion molding apparatuses, it is possible to select the amount of the wet mixture to be allocated among the apparatuses by adjusting factors such as the movement speed of the belt conveyer 35, and the running time and the like in the forward and reverse rotation directions. Also, it is acceptable to simply select how much of the wet mixture is to be sent to either storage in an appropriate manner.

In the conveyer apparatus 30, since it is possible for the storage portion 31A and the storage portion 31B to fulfill a role as a buffer, even in cases in which in the wet mixing machine (not shown), which is at the process preceding the conveyer apparatus 30, mixing is continuous and the wet mixture is charged into the conveyer apparatus 30 in a continuous manner while the operation of the subsequent process is currently stopped, it is possible to maintain that state just as it is if the period of time in question is relatively short.

Also, even in the opposite case in which the mixing of the wet mixing machine is currently stopped and the wet mixture is not being charged into the conveyer apparatus 30 yet it is still necessary for wet mixture to be supplied to the apparatus of the subsequent process, it is still possible to continuously supply the wet mixture to the apparatuses of the subsequent processes such as the extrusion molding apparatus and the like.

The conveyer apparatus 30 shown in Fig. 1 is a conveyer apparatus comprising a distribution mechanism, and the distribution mechanism is disposed on the conveyer portion 32.

However, the structure of the conveyer apparatus according to the present disclosure is not limited to this kind, as it is possible for instance to have a structure mentioned below.

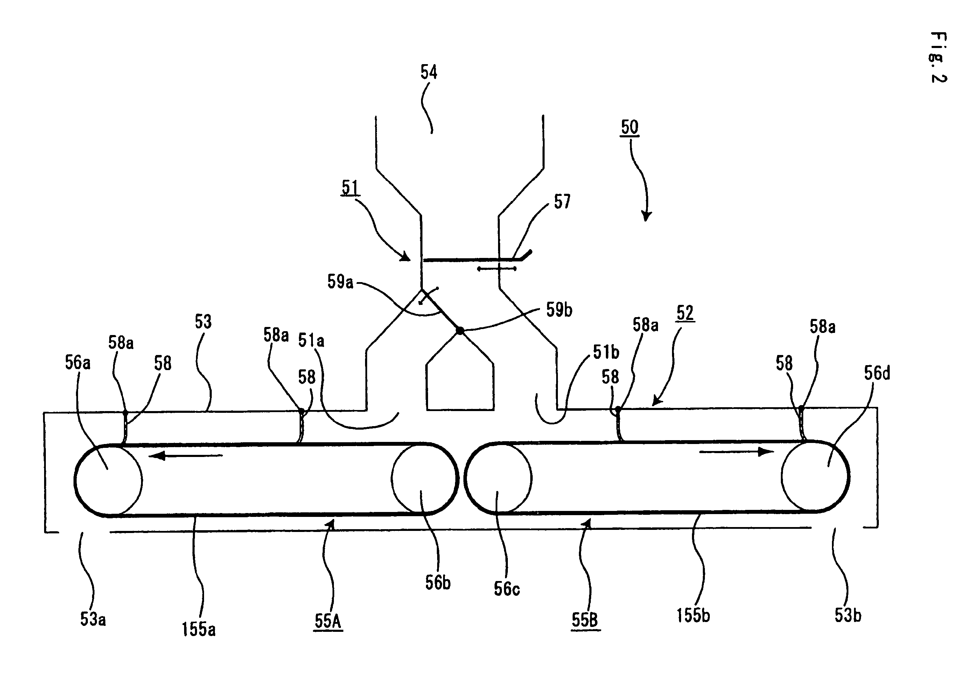

Fig. 2 is a cross sectional view schematically showing another example of the conveyer apparatus according to the present invention.

Although the conveyer apparatus 50 shown in Fig. 2 is one comprising a conveyer portion 52 and a storage portion 51, the conveyer apparatus 50 differs from the conveyer apparatus 30 shown in Fig. 1 at the point of comprising the storage portion 51 in the upstream side from the conveyer portion 52 in the conveyance path of the wet mixture.

More specifically, the conveyer apparatus 50 comprises the conveyer portion 52 configured to convey the wet mixture, and the storage portion 51 for temporarily storing the wet mixture. The conveyer portion 52 comprises a casing 53, and belt conveyers 55A, 55B.

Discharging ports 51a, 51b disposed at the bottom face of the storage portion 51 are in communication with the top face of the casing 53, and it is possible to charge the wet mixture into the interior of the casing 53 through the discharging port 51a and the discharging port 51b.

The conveyer apparatus 50, in the same manner as in the conveyer apparatus 30 shown in Fig. 1, is constituted in a manner that the casing 53 is disposed to entirely cover the belt conveyer 55A, the belt conveyer 55B and their surroundings and the entirety of the conveyer portion 52 can be hermetically enclosed. In this manner, since it is possible to prevent the moisture contained in the air within the casing 53 from moving out of the casing 53 and to prevent the drying of the wet mixture in the conveyer portion 52, it is possible to conduct conveying of the wet mixture while retaining the moisture content of the wet mixture so that the rate of moisture content change of the wet mixture between before and after conveyance process is kept to 3% or less.

Also, it is acceptable to dispose a partition member 58 for partitioning the interior of the casing 53 near the end portion of the downstream side of each of the belt conveyer 55A and the belt conveyer 55B. With this, it is possible to even more narrowly partition off the space in which the wet mixture exists and thereby even further reduce the rate of moisture content change of the wet mixture within the space partitioned off.

Also, since the shape, material, and the like of the casing 53, a belt 155a, a belt 155b, the partition member 58, and a shaft 58a are identical to those in the conveyer apparatus 30 shown in Fig. 1, explanation is omitted.

In the casing 53, the belt conveyer 55A (constituted by the belt 155a and rollers 56a, 56b), and the belt conveyer 55B (constituted by the belt 155b and rollers 56c, 56d) are disposed, and each of the belt conveyer 55A and belt conveyer 55B is constituted in such a manner that it can convey the wet mixture toward the end portion side of the casing 53.

The storage portion 51 has an open/close plate 57 slidable in the left and right directions. By setting this open/ close plate 57 into a closed state (the state depicted in Fig. 2), it is possible to divide the interior space of the storage portion 51 into an upper portion and a lower portion.

The portion on the lower side of the storage portion 51 divided by the open/close plate 57 comprises at its bottom face the discharging ports 51a, 51b at two places, thereby comprising a distribution mechanism for discharging the wet mixture from only one of the discharging ports.

More specifically, a shaft member 59b is installed at a bifurcation point between the discharging port 51a and the discharging port 51b in a manner able to rotate, and one side of a plate-shaped switch plate 59a is fixed onto this shaft member 59b. This switch plate 59a is constituted in a manner able to move over a prescribed angle according to the rotation of the shaft member 59b.

In this kind of storage portion 51, in a case in which the open/close plate 57 is closed, it is possible to store wet mixture prepared within a wet mixing machine (not shown) in the upper portion (the portion above the open/close plate 57, in Fig. 2).

Also, in a case in which the charge of the wet mixture from the wet mixing machine is currently stopped, it is effective, in the prevention of drying of the wet mixture, to dispose an open/close plate or the like at a wet mixture charging port 54 to close the charging port 54 thereby narrowly partitioning off the space in which the wet mixture exists.

Also, in cases in which the open/close plate 57 has been slided to make an open state, it is then possible to charge the wet mixture into the interior of the casing 53 through the discharging port 51a and the discharging port 51b. Here, by disposing the switch plate 59a in a position (refer to Fig. 2) closing the discharging port 51a, it is possible to charge the wet mixture stored above the open/close plate 57 into the interior of the casing 53 through the discharging port 51b. Moreover, in a case in which the position of the switch plate 59a is switched so that it therefore is made to close the discharging port 51b side, it is alternately possible to charge the stored wet mixture into the interior of the casing 53 through the discharging port 51a.

In this case, the amount of the wet mixture to be discharged from either the discharging port 51a or the discharging port 51b can be adjusted by adjusting the degree of openness of the open/close plate 57.

Also, by using a vibrator or the like, it is possible to apply vibrations to thereby force wet mixture to fall in a small amount at a time, and by adjusting the strength of the vibrations, it is possible to control the amount of the wet mixture discharged from either the discharging port 51a or the discharging port 51b.

Therefore, with this storage portion 51 it is possible to temporarily store the wet mixture in the portion above the open/close plate 57 by closing the open/close plate 57, distribute the wet mixture by selecting which discharging port to open (or close off) by the switch plate 59a, and thereby conduct charge of the wet mixture into the interior of the casing 53. More specifically, in a case in which the discharging port 51a of the storage portion 51 is opened, wet mixture is deposited on the belt 155a, and in a case in which the discharging port 51b is opened, the wet mixture is deposited on the belt 155b.

It is also acceptable to set the switch plate 59a at a position at which it closes off neither the discharging port 51a nor the discharging port 51b, thereby charging the wet mixture from both the discharging port 51a and the discharging port 51b simultaneously. In this manner, in the conveyer apparatus 50, the storage portion 51 comprises a storage mechanism and a distribution mechanism.

Also, after the wet mixture deposited on each the belt 155a and the belt 155b is conveyed in its prescribed direction by the belt conveyer 55A and the belt conveyer 55B, it is supplied to the apparatus of the next process through a discharging port 53a and a discharging port 53b disposed on the casing 53.

Although the conveyer apparatuses explained above with reference to Figs. 1 and 2 are conveyer apparatuses comprising storage portions on either the upstream side or the downstream side of the conveyer portion, it is acceptable if the conveyer apparatus according to the present disclosure does not even comprise a storage portion, or it comprises storage portions on both the upstream and the downstream sides of the conveyer portion.

Also, although in the conveyer apparatuses of Figs. 1 and 2, either the conveyer portion or the storage portion comprises a distribution mechanism, it is acceptable not to comprise a distribution mechanism, or to alternately comprise distribution mechanisms at both the conveyer portion as well as the storage portion.

Also, in a case in which the conveyer apparatus according to the present disclosure comprises a distribution mechanism, the distribution destinations are not limited to be two sites, but can also be three or more.

Also, although the conveyer apparatuses shown in Figs. 1 and 2 comprise belt conveyers using flat-plane belts as the conveyer, the conveyer of the conveyer apparatus according to the present disclosure is not limited to this, and, for instance, may be the one shown in Fig. 3-1(a), 3-1(b), 3-2 (a) or 3-2(b) .

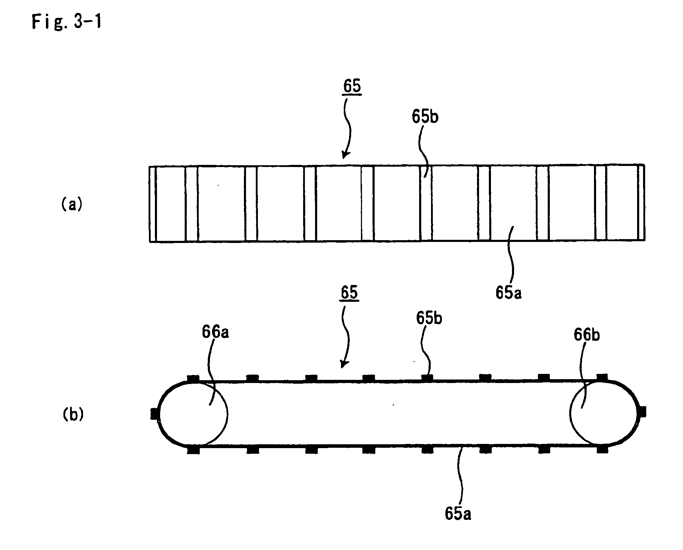

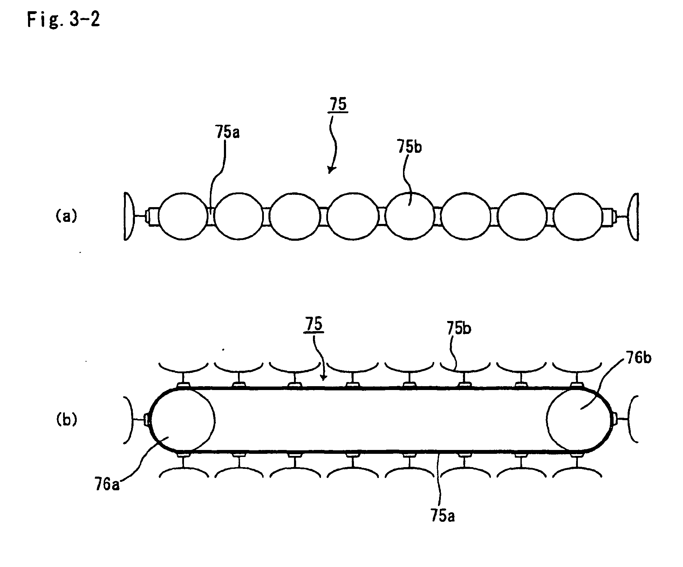

Fig. 3-1(a) and Fig. 3-2(a) are plan views each schematically showing another example of a conveyer constituting the conveyer apparatus according to the present disclosure while Fig. 3-1 (b) and Fig. 3-2 (b) are cross sectional views corresponding to Figs. 3-1(a) and 3-2(a), respectively.

A conveyer 65 shown in Figs. 3-1(a) and 3-1 (b) comprises a cleat type conveyer belt 65a and rollers 66a, 66b. Disposed on the cleat type conveyer belt 65a in the direction roughly perpendicular to the direction of movement of the belt are plate-shaped protrusions 65b. Incidentally, the conveyer portion comprising the conveyer 65 comprises a casing, although not shown, similar to the one shown in Fig. 1 or Fig. 2.

The shape of the cleat type conveyer belt 65a is not particularly limited. By disposing these cleats on the belt, it is possible to conduct conveyance without the wet mixture flowing downward past the surrounding cleats even in cases in which there is an incline present in the conveyance path.

Also, the material of the cleat type conveyer belt 65a is not particularly limited, and may for example include resins such as rubber, urethane, vinyl-chloride, fluorine resin, silicone resin, and the like.

Also, a conveyer 75 shown in Figs. 3-2(a) and 3-2(b) is a bucket-mounted chain conveyer, and comprises a bucket-mounted chain 75a, and rollers 76a, 76b. Fixed to the bucket-mounted chain 75a at regular intervals on the surface of the chain are buckets 75b for holding wet mixture. Incidentally, the conveyer portion comprising the conveyer 75 comprises a casing, although not shown, similar to the one shown in Fig. 1 or Fig. 2.

The shape of the bucket-mounted chain 75a is not particularly limited. By using a conveyer comprising the bucket-mounted chain 75a, it is possible to have a conveyer having no meandering of the belt even in cases in which the conveyance path is not a straight line.

Also, the shape and material of the bucket are not particularly limited. By disposing the buckets, it is possible to conduct conveyance of wet mixture even in cases in which there is an incline present in the conveyance path or it is necessary to convey in vertical directions.

The material of the chain 75a is not particularly limited, and may for example include resins such as rubber, urethane, vinyl-chloride, fluorine resin, silicone resin, as well as metal materials.

These kinds of conveyers shown in Figs. 3-1(a), 3-1(b), 3-2(a) and 3-2(b) can also be used favorably in the conveyer portion constituting the conveyer apparatus according to the present disclosure.

Also, aside from the belt conveyer, it is acceptable for the conveyer apparatus according to the present disclosure to use as the conveyer constituting its conveyer portion a chain conveyer, a pallet conveyer, a trolley conveyer, a flow conveyer, a flight conveyer, a disc conveyer, a power screw, a screw conveyer, or the like, for instance.

Next, explanation will be given in regard to the method for manufacturing a honeycomb structure according to the present invention.

The method for manufacturing a honeycomb structure according to the present invention a method for manufacturing a honeycomb structure comprising a honeycomb fired body comprising:

carrying out a conveyance process for conveying a wet mixture containing wet mixed inorganic powders to an extrusion molding process;
preparing by extrusion molding a pillar-shaped honeycomb molded body in which a multiplicity of cells are placed in parallel with one another in the longitudinal direction with a cell wall therebetween; and
firing the honeycomb molded body,

wherein

in the conveyance process, the wet mixture is conveyed to an extrusion molding apparatus by a conveyer apparatus comprising a conveyer portion having disposed therein a conveyer configured to convey a wet mixture; and

in the conveyer apparatus the conveyer portion comprises a casing to prevent the moisture contained in the air within the casing from moving out of the casing; and a partition member configured to partition off the interior of the casing near the end portion of the downstream side of the conveyer, so that the rate of moisture content change of the wet mixture between before and after conveyance is 3% or less.

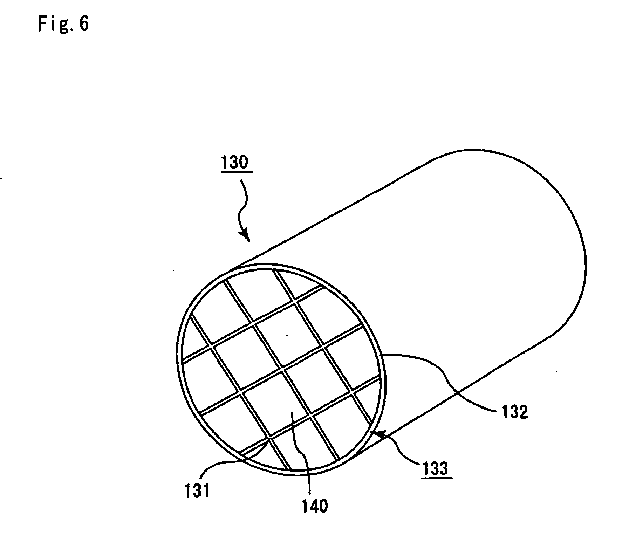

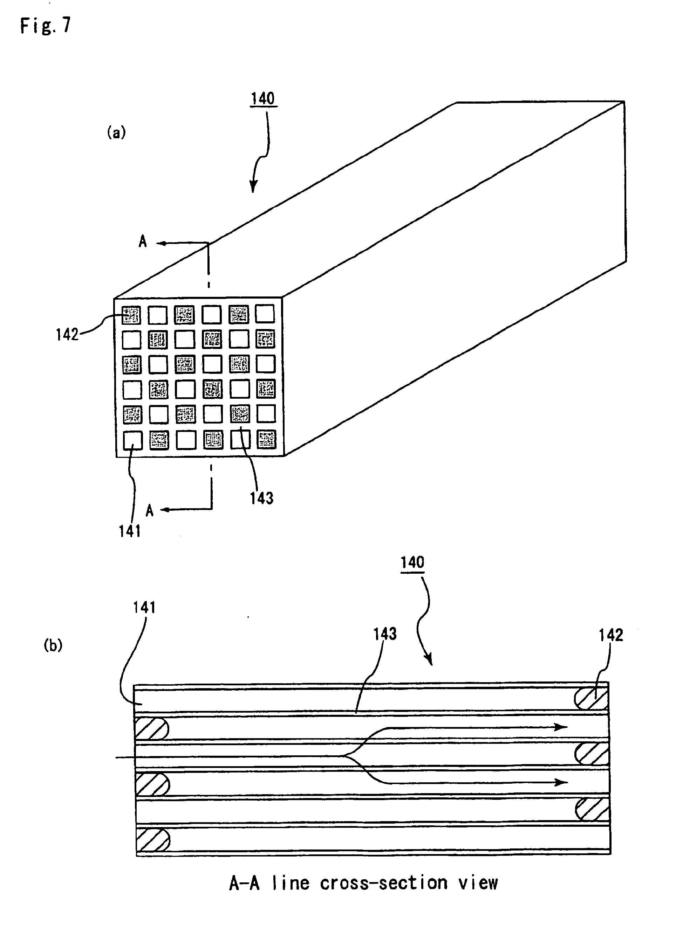

Fig. 6 is a perspective view schematically showing an example of a honeycomb structure. Fig. 7(a) is a perspective view schematically showing a honeycomb fired body which forms the above-mentioned honeycomb structure, while Fig. 7 (b) is an A-A line cross-sectional view thereof.

In a honeycomb structure 130, a plurality of honeycomb fired bodies 140, of the kind shown in Fig. 6, are combined with one another by interposing a sealing material layer (an adhesive layer) 131 forming a ceramic block 133, and a sealing material layer (a coat layer) 132 is formed on the periphery of the ceramic block 133.

Further, the honeycomb fired body 140 comprises, as shown in Figs. 7(a) and 7(b), a multitude of cells 141 placed in parallel in the longitudinal direction, and cell walls 143, which partition the cells 141 individually, and provide filtration functionality.

Put more plainly, as shown in Fig. 7 (b), the end portion of either the exhaust gas inlet side or the exhaust gas outlet side of the cells 141 formed in the honeycomb fired body 140 are sealed by a plug material layer 142. The exhaust gas which enters one cell 141 passes through the cell walls 143 dividing the cells 141 without fail, to flow out through another cell 141. When the exhaust gas passes through the cell wall 143, particulates contained within the exhaust gas are captured by the cell wall 143, thus purifying the exhaust gas.

Hereinbelow, the method for manufacturing a honeycomb structure according to the present invention will be described in process order.

Here, a method for manufacturing a honeycomb structure in a case wherein silicon carbide powder is used as inorganic powder, as an example of a case in which a honeycomb structure chiefly comprising silicon carbide as a main component is manufactured.

It is a matter of course, however, that the main component of the honeycomb structure is not limited to silicon carbide, and may be nitride ceramics such as aluminum nitride, silicon nitride, boron nitride, and titanium nitride, carbide ceramics such as zirconium carbide, titanium carbide, tantalum carbide, and tungsten carbide, oxide ceramics such as alumina, zirconia, cordierite, mullite, aluminum titanate, and the like.

Among these components, non-oxide ceramics are preferable, and silicon carbide is particularly preferable. This is because they are excellent in thermal resistance, mechanical strength, thermal conductivity and the like. Moreover, silicon-containing ceramic, which is the above-mentioned ceramic blended with metallic silicon, as well as ceramic bonded by silicon or silicate compounds can also be used as the constitutional material. Among these, silicon carbide blended with metallic silicon (silicon-containing silicon carbide) is preferable.

First, organic binder is dry mixed with an inorganic powder such as silicon carbide powder having a varying average particle diameter to prepare a powder blend. While the powder blend is being prepared, a liquid blend is prepared by blending liquid plasticizer, lubricating agent, and water. Next, the above mentioned powder blend and the above mentioned liquid blend are further blended together using a wet mixing machine, and thus a wet mixture for manufacturing the molded body is prepared.

Now although the particle diameter of the above mentioned silicon carbide powder is not particularly limited, a particle diameter causing little shrinkage in the following firing process is preferable, and for example, a combination of 100 parts by weight of powders having an average particle diameter of 0.3 to 50 $\mu$m, and 5 to 65 parts by weight of powders having an average particle diameter of 0.1 to 1.0 $\mu$m is preferable. Although in order to adjust the pore diameter and the like of the honeycomb fired body, it is necessary to adjust the firing temperature, the pore diameter can also be adjusted by adjusting the particle diameter of the inorganic powder.

The above-mentioned organic binder is not particularly limited, and examples thereof may include methyl cellulose, carboxymethyl cellulose, hydroxyethyl cellulose, polyethylene glycol and the like. Among these, methyl cellulose is preferable.

It is preferable that the above mentioned binder be blended with the inorganic powder at a ratio of around 1 to 10 weight of binder per 100 weight of inorganic powder.

The above-mentioned plasticizer is not particularly limited, and examples thereof may include glycerin and the like.

Also, the above-mentioned lubricant is not particularly limited, and examples thereof may include polyoxyalkylene compounds such as polyoxyethylene alkyl ether, polyoxypropylene alkyl ether, and the like.

Specific examples of the lubricant may include, polyoxyethylene monobutyl ether, polyoxypropylene monobutyl ether and the like.

Also, in some cases, it is unnecessary to use plasticizer or lubricating agent in the material powder blend.

Also, when preparing the above mentioned wet mixture, it is acceptable to use a liquid dispersing medium such as water, organic solvents such as benzene, and alcohol such as methanol.

Further, it is also acceptable to add a molding auxiliary to the above mentioned wet mixture.

The molding auxiliary is not limited in particular, and examples thereof may include ethylene glycol, dextrin, fatty acids, fatty acid soap, polyalcohol, or the like.

Further, it is acceptable to add balloons, which are micro-sized hollow spherical bodies containing oxide ceramic as component, and pore-forming agent such as a spherical acrylic particle or graphite to the above-mentioned wet mixture, if necessary.

The above-mentioned balloon is not particularly limited, and examples thereof may include alumina balloon, glass micro balloon, shirasu balloon, fly ash balloon (FA balloon), mullite balloon and the like. Among these, alumina balloon is preferable.

Also, the wet mixture prepared here using silicon carbide powder is preferably at a temperature of 28°C or less. If the temperature that is too high, the organic binder may gelate.

Also, it is preferable that the proportion of organic component within the above mentioned wet mixture be 10% by weight or less.

The above mentioned wet mixture is conveyed after preparation and supplied to a molding apparatus.

In the method for manufacturing a honeycomb structure according to the present invention, a conveyer apparatus capable of keeping the rate of moisture content change of the wet mixture between before and after conveyance to 3% or less is used.

Specifically, it is possible to use the conveyer apparatus according to the present disclosure already described hereinabove.

Here, an explanation is given concerning a desirable moisture content within the wet mixture in the method for manufacturing a honeycomb structure when water is used as a liquid dispersing medium. The desirable value of the moisture content within the wet mixture is as follows: the desirable lower limit is 10% by weight, more desirably 12% by weight. The desirable upper limit is 20% by weight, more desirably 15% by weight. This is because if the moisture content is less than 10% by weight, cracks, cell cut-off and the like easily occur in the molded body, while if the moisture content exceeds 20% by weight, it is difficult for the extruded molded body to maintain a constant shape until it is dried. For this reason, it is necessary to control the moisture content of the wet mixture within the above mentioned range.

Here, the extrusion molding process using the extrusion molding apparatus mentioned hereinafter is a process that first sets various conditions such as the molding force, molding speed, and the like optimized in accordance with the theoretical moisture content value obtained when mixing the wet mixture supplied to the extrusion molding apparatus, and then conducts extrusion molding with those set condition.

Because of this, even if the actual measured value of the moisture content of the wet mixture supplied to the extrusion molding apparatus is within the above mentioned range (10 to 20% by weight), the extrusion molding conditions are not suitable to attain a molded body of a constant level of quality if the divergence of the theoretical value of the above mentioned moisture content with the actual measured value is great, cracks, cell cut-off and the like may occur in the molded body, or possibly the extruded molded body cannot maintain a constant shape until it is dried.

In particular, in the extrusion molding process in the manufacturing process of a honeycomb structure according to the present invention, it is desirable to use a wet mixture with a moisture content in the range of 10 to 20% by weight and with the difference of the actual measured value and the above mentioned theoretical value of the above mentioned moisture content within ±3%. This is because in a case in which extrusion molding is conducted with a wet mixture having a moisture content within the above mentioned range and conducted under the extrusion molding conditions set optimally for the moisture content, inconveniences such as cracks, cell cut-off and the like in the molded body do not occur, or inconveniences wherein the molded body cannot maintain a constant shape do not occur easily.

In the method for manufacturing a honeycomb structure according to the present invention, since conveyance is conducted using the conveyer apparatus described hereinabove, it is possible to keep the amount of moisture evaporation occurring within the casing small and thereby prevent drying of the wet mixture. Because of this, it is possible to conduct conveyance in such a manner that the rate of moisture content change of the wet mixture between before and after conveyance is kept to as low as 3% or less. Also, in cases of using a conveyer apparatus having a partition member, it is possible to further reduce the amount of moisture evaporating from the wet mixture, and thereby even further reduce the rate of moisture content change of the wet mixture between before and after conveyance process. Because of this, it is possible to convey a wet mixture while maintaining a suitable moisture content and supply this wet mixture to the extrusion molding apparatus in a stable manner.

Also, in a case of using the above mentioned conveyer apparatus having a storage portion, it is of course possible to conduct conveyance of a wet mixture to the extrusion molding apparatus of the next process in such a manner that the wet mixture maintains a suitable moisture content. In addition, in the next process and the subsequent processes (set forth hereinbelow), even if a trouble arises and the production line is stopped, because it is still possible to temporarily store the wet mixture in the storage portion, it is possible to keep the previous process of preparing wet mixture in operation without stopping.

Also, it is preferable that the conveyer apparatus according to the present invention used here be able to store inside of the storage portion the wet mixture 1.5 to 3 times (weight conversion) as much as the molding capability of the extrusion molding apparatus.

Also, in the method for manufacturing a honeycomb structure according to the present invention, when conveying the prepared wet mixture, it is desirable to store the above mentioned wet mixture in the above mentioned storage portion for a given period of time. This is because the moldability of the wet mixture is improved in the subsequent extrusion molding process.

The reason for this is not clear, but it is thought to lie in that when the above mentioned wet mixture is thus stored, it is cooled and aged, and during this time of cooling and aging, the organic binder undergoes swelling and the lubricative properties of the inorganic powder (silicon carbide powder) improves.

In a case of storing the above mentioned wet mixture for a given period of time, although the storage time period is not particularly limited, it is desirable that the lower limit be 1 hour, and is even more desirable if the lower limit is 4 hours. It is desirable that the upper limit of the storage time period be 10 hours, and is even more desirable if the upper limit is 8 hours.

This is because, if the storage time period is less than 1 hour, there will be little improvement in the moldability of the wet mixture, and if the storage time period exceeds 10 hours, portions of the wet mixture will undergo drying which will actually adversely degrade the moldability of the wet mixture.

In a case in which the moldability of the wet mixture has improved, it is possible to lessen the molding force used during extrusion molding, and by lessening the molding force, it is possible to reduce the occurrence rate of molding defects while lengthening the lifespan of the wear-out components (die and the like) constituting the extrusion molding apparatus.

When storing the wet mixture as mentioned above, it is desirable to dispose an openable and closable open/close plate at the storage portion of the conveyer apparatus and close the open/close plate during storage thereby

10

sealing off the storage portion. This is because, since it is possible to narrowly partition off the space in which the stored wet mixture exists, it is possible to prevent drying of the wet mixture stored within the storage portion and therefore supply a wet mixture having a suitable moisture content to the extrusion molding process thereafter.

Next, the extrusion molding process is carried out.

Although the extrusion molding apparatus used in the extrusion molding process in the method for manufacturing a honeycomb structure according to the present invention is not particularly limited, explanation will be given hereinbelow concerning an example of an extrusion molding apparatus and an extrusion molding method using the same with reference to the figures.

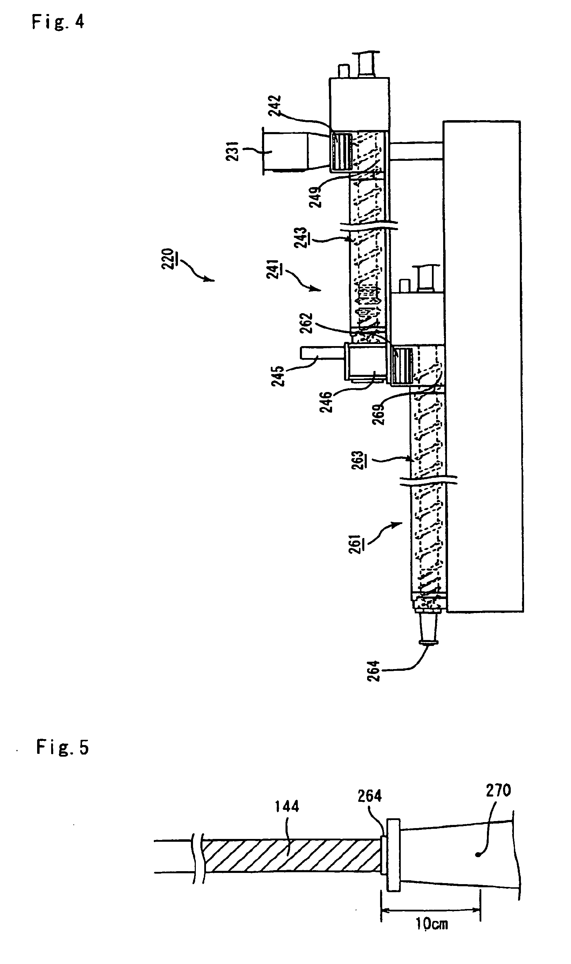

Fig. 4 is a cross sectional view schematically showing an example of the extrusion molding apparatus used in the extrusion molding process.

This extrusion molding apparatus 220 comprises two screw mixers including an upper tier screw mixer 241 and a lower tier screw mixer 261. A screw comprising an agitation shaft (screw shaft) and an agitation blade (screw blade) is disposed in each the upper tier screw mixer 241 and the lower tier screw mixer 261.

Disposed on one end portion of the above mentioned upper tier screw mixer 241 is a charge hopper 231 configured to take in a pre-mixed raw material wet mixture, and disposed in a reception port 249 on the bottom of the charge hopper 231 is a knead-press roller 242 configured to press the wet mixture into the interior of the upper tier screw mixer 241.

The knead-press roller 242 presses the wet mixture that has fallen down through the charge hopper 231 in between a pair of knead-press rollers while kneading the wet mixture, and thereafter pushes the wet mixture out of the underside of the rollers by rotating inwardly, thereby supplying the wet mixture to the interior of the upper tier screw mixer 241.

The upper tier screw mixer 241 comprises an upper tier screw 243 comprising a feed screw and a take screw disposed at the front end of the feed screw. The feed screw has a role of moving the wet mixture while kneading the same, and the take screw is configured mainly to knead the wet mixture. In the feed screw a screw blade (agitation blade) is wrapped around a screw shaft in a spiral shape, and with this blade, the wet mixture is both kneaded and pushed out in a forward direction.

In the take blade, there are a plurality of screw blades formed on the screw shaft in a manner forming a ring around the circumferential direction of the screw shaft, and there is a portion that is disconnected in a slanting direction and has no screw blade. Kneading of the wet mixture proceeds further while the wet mixture passes through this portion.

Situated on the other end of the upper tier screw mixer 241 is an upper tier die (mouth-piece) having a multitude of through holes formed thereon. After passing through the take screw, the wet mixture is pressed into this upper tier die and is extruded in a state in which the wet mixture is shaped like a rod or Japanese noodle, for instance.

Disposed on the portion at which the wet mixture is extruded from the upper tier die is a decompression chamber 246, the interior of which is in a state of decompression nearing a vacuum state. The interior of the upper tier screw mixer 241 and the lower tier screw mixer 261 are also held in a state of decompression so as not to trap bubbles (air) in the wet mixture. If bubbles are trapped in the wet mixture, it becomes easy for defects caused by bubbles situated inside of the partition walls and the like to occur when producing the molded body.

Also, disposed on the inside of the decompression chamber 246 and near the upper tier die is an upper tier cutter 245 used as a cutting member. More specifically, the blade of the upper tier cutter 245 is situated in the interior of the decompression chamber 246, and this blade portion is set into reciprocating motion in the up/down directions near the upper tier die by an air cylinder disposed on the decompression chamber 246, in a manner cutting the wet mixture, which has been extruded from the upper tier die in a Japanese noodle shape (or rod shape), into smaller pieces.

The multitude of cut small pieces immediately fall into a reception port 269 of the underlying lower tier screw mixer 261, and are pressed into the interior of the lower tier screw mixer 261 by a knead-press roller 262 (which is constituted in a manner similar to the above described knead-press roller 242) . In this way, the mixing of the wet mixture proceeds further.

The lower tier screw mixer 261 comprises a lower tier screw 263 comprising a feed screw and a W blade screw disposed on the front of the feed screw. At the front end portion the wet mixture is pressed quantitatively into a die 264. In this manner, by repeating the action of kneading, the mixing of the wet mixture proceeds sufficiently, and the wet mixture thereby takes the form of a composite exhibiting uniformity in its moisture content, composition, and the like, and is then extruded in a continuous manner from the die 264 to form a continuous rectangular pillar-shaped molded body with a plurality of cells in the longitudinal direction.

Also, in the extrusion molding apparatus 220 shown in Fig. 1, although the wet mixture is pressed into the screw mixer by the knead-press machine, it is also acceptable for the wet mixture to be pressed into the screw mixer by another means, and it is also acceptable to only form a charge hopper. Also, the assembly arrangement of the screws disposed in the interior of the screw mixer is not limited to the above described assembly arrangement. It is also acceptable, for example, to constitute the screw with feed screws only, or another assembly arrangement is acceptable.

In this extrusion molding apparatus 220, after wet mixture has entered the interior of the extrusion molding apparatus 220, it is preferable that the time period until it is extruded be in the range of 50 to 90 minutes. This is because it is necessary to achieve a sufficient degree of mixing and to obtain an entirely uniform composition such as moisture and the like.

Also, during extrusion molding it is desirable that the speed at which the molded body is extruded be in the range of 3500 to 4500 mm/min. At a speed of less than 3500 mm/min, the production efficiency drops, thus the speed is unfavorable, and at an extrusion speed exceeding 4500 mm/min, it becomes difficult to obtain the honeycomb molded body with the designed dimensions and defects easily occur in the produced honeycomb molded body.

Regarding these molding conditions, it is necessary to set the optimum values in accordance with the theoretical value of the moisture content at the time of preparation of the wet mixture.

By supplying the wet mixture conveyed by the above mentioned conveyer apparatus to the above mentioned extrusion molding apparatus, it is possible, by extrusion molding, to form a pillar shaped honeycomb molded body with a multitude of cells placed in parallel with one another in the longitudinal direction and partitioned by cell walls.

Next, using a drying apparatus such as a microwave drying apparatus, a hot air drying apparatus, a dielectric drying apparatus, a reduced pressure drying apparatus, a vacuum drying apparatus, or a freeze drying apparatus, the above mentioned honeycomb molded body is dried out.

Then, if necessary, the end portion of the outlet side of the group of inlet cells as well as the end portion of the inlet side of the group of outlet cells are filled with a prescribed amount of plug material paste which will serve as plugs, thereby plugging the cells.

Although above-mentioned plug material paste is not particularly limited, one which makes the porosity of the plug material manufactured in the subsequent processes in the range of 30% to 75% is preferable. It is possible to use for instance a substance identical to the above-mentioned wet mixture as the plug material paste.

Next, by degreasing (at 200°C to 500°C, for example) and firing (at 1400°C to 2300°C, for example) a honeycomb molded body under prescribed conditions, which is plugged with the above-mentioned plug material paste and dried, it is possible to manufacture a honeycomb fired body comprising a plurality of cells placed in parallel with one another in the longitudinal direction with a cell wall therebetween, and either end portion of each cell is plugged.

In regard to the conditions for degreasing and firing the above-mentioned honeycomb molded body, it is possible to apply conventional conditions used for manufacturing a filter comprising porous ceramic.

Next, the sealing material paste which will serve as the seal layer is applied onto the side of the honeycomb fired body at a uniform thickness to form the sealing material paste layer. A process of successively piling up other honeycomb fired bodies on this sealing material paste layer is carried out repeatedly, thereby manufacturing an aggregate of honeycomb fired bodies with a prescribed size.

Examples of the above-mentioned sealing material paste include a material comprising an inorganic fiber and/or an inorganic particle in addition to an inorganic binder and an organic binder, for instance.

Examples of the above-mentioned inorganic binder include silica sol, alumina sol and the like, for instance. It is also acceptable to use the above alone or in combination. Among the above-mentioned inorganic binders, silica sol is preferable.

Examples of the above-mentioned organic binder include polyvinyl alcohol, methyl cellulose, ethyl cellulose, carboxymethyl cellulose and the like, for instance. It is also acceptable to use the above alone or in combination. Among the above-mentioned organic binders, carboxymethyl cellulose is preferable.

Examples of the above-mentioned inorganic fiber include a ceramic fiber or the like such as silica-alumina, mullite, alumina, and silica, for instance. It is also acceptable to use the above alone or in combination. Among the above-mentioned inorganic fibers, alumina fiber is preferable.

Examples of the above-mentioned inorganic particle include carbide, nitride and the like, for instance. More concrete examples include inorganic powders comprising silicon carbide, silicon nitride, or boron nitride. It is also acceptable to use the above alone or in combination. Among the above-mentioned inorganic particle, silicon carbide, excellent in thermal conductivity, is preferable.

Moreover, it is acceptable to add balloons, which are micro-sized hollow spherical bodies containing oxide ceramic as component, and pore-forming agent such as a spherical acrylic particle or graphite to the above-mentioned sealing material paste, if necessary.

The above-mentioned balloon is not particularly limited, and examples thereof may include alumina balloon, glass micro balloon, shirasu balloon, fly ash balloon (FA balloon), mullite balloon and the like. Among these, alumina balloon is preferable.

Next, this aggregate of honeycomb fired bodies is heated to dry and solidify the sealing material paste layer, thereby forming the sealing material layer (the adhesive layer).

Next, using a diamond cutter or the like, a cutting process is carried out on the aggregate of the honeycomb fired bodies in which a plurality of honeycomb fired bodies are combined with one another by interposing the sealing material layer (the adhesive layer), thereby manufacturing a cylindrical shaped ceramic block.

Then a sealing material layer is formed on the outer periphery of the ceramic block by using the above-mentioned sealing material paste to manufacture a honeycomb structure in which the sealing material layer (coat layer) is formed on the peripheral portion of the cylindrical ceramic block comprising a plurality of the honeycomb fired bodies combined with one another by interposing the sealing material layer (adhesive layer).

Afterward, a catalyst is supported on the honeycomb structure if necessary. The supporting of the above-mentioned catalyst can be carried out on the honeycomb fired body before manufacturing the aggregate body.

In a case of supporting the catalyst, it is preferable to form an alumina film of a high specific surface area on the surface of the honeycomb structure, and then supply a co-catalyst or a catalyst such as platinum or the like onto the surface of this alumina film.

Examples of methods for forming the alumina film onto the surface of the above-mentioned honeycomb structure include a method of impregnating the honeycomb structure with a solution of a metallic compound containing an aluminum such as $Al(NO_3)_3$ and then heating, a method of impregnating the honeycomb structure with a solution containing an aluminum powder and then heating, and the like, for instance.

Examples of methods for supplying the co-catalyst to the above-mentioned alumina film include a method of impregnating the honeycomb structure with a metallic compound solution containing rare earth elements or the like such as $Ce(NO_3)_3$ and then heating; and the like, for instance.

Examples of methods for supplying the catalyst to the above-mentioned alumina film include a method of impregnating the honeycomb structure with a nitric acid solution of diammine dinitro platinum ($[Pt(NH_3)_2(NO_2)_2]HNO_3$, platinum concentration: 4.53% by weight) and the like and then heating, and the like, for instance.

It is also acceptable to supply the catalyst by a method of supplying a catalyst to alumina particle in advance, and impregnating the honeycomb structure with a solution containing the alumina powder that has been given the catalyst, and then heating.

Also, although the honeycomb structure manufactured by the method for manufacturing a honeycomb structure described above is a honeycomb structure having a structure that a plurality of honeycomb fired bodies are combined with one another by interposing a sealing material layer (adhesive layer) (hereinafter termed 'aggregated honeycomb structure'), the honeycomb structure manufactured by the method for manufacturing according to the present invention can also be a honeycomb structure in which a cylindrical ceramic block is constituted by a single honeycomb fired body (hereinafter termed 'integral honeycomb structure').

In a case of manufacturing such an integral honeycomb structure, the honeycomb molded body is manufactured using the same methods used in the manufacture of the aggregated honeycomb structure, except that the size of the honeycomb molded body molded by extrusion molding is larger than the size of the honeycomb molded body in the manufacture of the aggregated honeycomb structure.

Here, methods and the like of conveying and storing the wet mixture yet to be extrusion molded are identical to the method of manufacturing the above mentioned aggregated honeycomb structure, and thus the explanation will be omitted.

Next, in the same manner as in the manufacture of the aggregated honeycomb structure, the honeycomb molded body is dried using a microwave drying apparatus, a hot air drying apparatus, a dielectric drying apparatus, a reduced pressure drying apparatus, a vacuum drying apparatus, a freeze drying apparatus, or the like to form a honeycomb dried body. Then, the end portion of the outlet side of the group of inlet cells as well as the end portion of the inlet side of the group of outlet cells are filled with a prescribed amount of the plug material paste which will serve as the plugs, thereby plugging the cells.

Afterward, in the same manner as in the manufacture of the aggregated honeycomb structure, a ceramic block is manufactured by degreasing and firing, and by forming the sealing material layer (the coat layer), if necessary, the integral honeycomb structure is manufactured. It is also possible to support a catalyst using the methods set forth above, in the above-mentioned integral honeycomb structure.

By the method for manufacturing a honeycomb structure according to the present invention described hereinabove, it is possible to supply the wet mixture having a suitable moisture content to the extrusion molding apparatus in a stable manner, and to produce the extrusion molded body without cracks, cell cut-off and the like after the extrusion molding process when manufacturing a honeycomb structure.

Also, in cases of producing a honeycomb structure according to the above described method, although it is acceptable to carry out a single run of the production process with a single production line, it is, for instance, also acceptable to use a conveyer apparatus comprising a distribution mechanism as the conveyer apparatus and carry out the portion of the process up until the point of charge of the wet mixture with a single production line, and then carry out the portion of the process from the process of producing molded bodies using an extrusion molding apparatus with a plurality (two production lines or more) of production lines.

In such a case, the wet mixture is distributed and supplied to each production line at the proper time by the distribution mechanism equipped in the above mentioned conveyer apparatus.

EXAMPLES

Hereinbelow, in the method for manufacturing a honeycomb structure using the conveyer apparatus according to the present disclosure, honeycomb molded bodies are produced by extrusion molding process with an extrusion molding apparatus set with molding conditions which are optimum if the moisture content of the wet mixture supplied to the extrusion molding apparatus is 13.4% by weight. Change of the moisture content of the wet mixture after the conveyance process in comparison with before the conveyance process, and the value of the pressure during extrusion molding were measured, while carrying out evaluation of each of the produced honeycomb molded bodies as to their outward appearance (i.e. presence of a parched state in the surface, presence of cracks, presence of holes or fissures on portions of cell wall, or presence of cell cut-off) as well as any formation of warpage. Also evaluated was the correlation between the moisture content of the wet mixture of before and after conveying process, the rate of change of the moisture content of the wet mixture after conveyance process in comparison with before conveyance process and the number of occurrences of faulty product.

Now the phrase 'rate of moisture content change of the wet mixture between before and after conveyance process' is used to refer to the rate of moisture content change of the wet mixture obtained from the moisture content of the wet mixture at the time of charging the wet mixture into the conveyer apparatus after kneading (i.e. the moisture content of the wet mixture before it is conveyed), and the moisture content of the wet mixture immediately before the time of charging the wet mixture into the extrusion molding apparatus (i. e. the moisture content of the wet mixture after it is conveyed). Specifically, the rate is obtained by the following formula (1).

rate of moisture content change of the wet mixture between before and after conveyance process = (the moisture content of the wet mixture after it is conveyed – the moisture content of the wet mixture before it is conveyed)/the moisture content of the wet mixture before it is conveyed　・・・　(1)

In a case in which the wet mixture is temporarily stored by a storage portion or the like before it is charged into the extrusion molding apparatus, the storage is included in the conveyance process and the rate of moisture content change is calculated using the moisture content of the wet mixture immediately before the time of charging the wet mixture into the extrusion molding apparatus (i.e. the moisture content of the wet mixture after it is conveyed).

The molding speed and the molding pressure for each example were set to 4000 mm/min and 5.8MPa, respectively, as the molding conditions optimized at the time at which the moisture content of the above mentioned wet mixture is 13.4% by weight.

Also, the conveyer apparatus was situated in a room at a temperature of approximately 20°C.

Fig. 5 is a cross sectional view schematically showing an area at which the value of the pressure during molding was measured.

(Example 1)

250 kg of $\alpha$-type silicon carbide powder having an average particle diameter of 10 $\mu$m, 100 kg of $\alpha$-type silicon carbide powder having an average particle diameter of 0.5 $\mu$m, and 20 kg of organic binder (methylcellulose) were blended together to prepare a powder blend.

Next, 12 kg of lubricating agent (UNILUB, Manufactured by NOF Corp.), 5 kg of plasticizer (glycerin), and 60 kg of water were blended in a separate container to prepare a liquid mixture. Next, using a wet mixing apparatus, the powder blend and the liquid mixture were blended together, thereby preparing the wet mixture. The moisture content of the wet mixture was then measured.

Now, the moisture content of the wet mixture was measured by the halogen moisture meter HR83 manufactured by METTLER TOLEDO using approximately 2g of the wet mixture.

Next, using the conveyer apparatus 30 according to the present invention shown in Fig. 1, a conveyance process to convey this wet mixture to the extrusion molding apparatus 220 was carried out.

A conveyer apparatus comprising the casing 33 and the partition members 38 situated at four sites, as shown in Fig. 1, was used as the conveyer apparatus here.

Although the conveyer apparatus 30 in Fig. 1 comprises a distribution mechanism, in the present example the wet mixture charged from the charging port 34 was conveyed via the belt conveyer 35 to the storage portion 31A without using the distribution mechanism.

Here, its structure is as follows. The horizontal distance from the charging port 34 to the storage portion 31A was approximately 5 m, and the charge hopper 231 of the extrusion molding apparatus 220 shown in Fig. 4 was connected with the bottom portion of the storage portion 31A.

Next, the wet mixture was stored inside of the storage portion 31A with the storage time period of the wet mixture of 0.5 hour or less, and then the wet mixture was supplied to the charge hopper 231 (of the extrusion molding apparatus 220) connected with and directly under the storage portion 31A.

Here, a portion of the wet mixture to be supplied to the charge hopper 231 was extracted and the moisture content of the wet mixture after conveyance was measured.

Then the measured moisture content of the wet mixture after conveyance was compared to the previously measured moisture content of the wet mixture before conveyance, and rate of moisture content change of the wet mixture between before and after conveyance was calculated.

Then, as described before, extrusion molding was carried out setting the molding speed and the molding pressure of the extrusion molding apparatus 220 to 4000 mm/min and 5.8MPa, respectively, to produce a raw molded body 144 (refer to Fig. 5) having the same shape as the honeycomb fired body 140 (refer to Figs. 7(a) and 7(b)).

At this time, the value of the pressure during extrusion molding is measured by disposing a pressure sensor 270 at 10cm in front of outlet of the die 264 as shown in Fig. 5.

A stainless small pressure transducer (PGM-500KD) manufactured by KYOWA ELECTRONIC INSTRUMENTS CO., LTD. was used as the pressure sensor here.

Next, after drying the raw molded body 144 using a microwave drying apparatus or the like, prescribed cells were filled with a plug material paste of a composition identical to that of the above-mentioned wet mixture.

Next, after carrying out another drying by using a drying apparatus, degreasing was carried out at 400°C and firing was carried out for three hours at normal pressures in an argon atmosphere at 2200°C to manufacture a honeycomb fired body comprising a silicon carbide fired body having a porosity of 40%, an average pore diameter of 12.5 $\mu$m, a size of 34.3 mm x 34.3 mm x 150 mm, the number of cells (cell concentration) of 46.5 pcs/cm$^2$, and a cell wall thickness of 0.25 mm.

Next, using a heat resistant sealing material paste containing 30% by weight of alumina fiber with an average fiber length of 20 $\mu$m, 21% by weight of silicon carbide powder with an average particle diameter of 0.6 $\mu$m, 15% by weight of silica sol, 5.6% by weight of carboxymethyl cellulose, and 28.4% by weight of water, a multitude of honeycomb fired bodies were adhered together, and further dried at a temperature of 120°C. Next, a cylindrical ceramic block having a 1.0 mm thick sealing material layer (adhesive layer) was produced by carrying out cutting using a diamond cutter.

Next, 23.3% by weight of silica-alumina fiber (average fiber length of 100 $\mu$m, average fiber diameter of 10 $\mu$m) as inorganic fiber, 30.2% by weight of silicon carbide powder with an average particle diameter of 0.3 $\mu$m as inorganic particle, 7% by weight of silica sol (SiO$_2$ content within the sol: 30% by weight) as inorganic binder, 0.5% by weight of carboxymethyl cellulose as organic binder, and 39.0% by weight of water were mixed and kneaded together to prepare a sealing material paste.

Next, a sealing material paste layer with a thickness of 0.2 mm was formed over the peripheral portion of the ceramic block using the above mentioned sealing material paste. This sealing material paste layer was then dried at a temperature of 120°C to produce a cylindrical honeycomb structure with dimensions: 143.8 mm Diameter X 150 mm Length, having a sealing material layer (coat layer) formed over the peripheral portion.

The above mentioned production process was repeatedly carried to produce 10 samples of honeycomb structures.

A visual examination of outward appearance was then carried out regarding mainly the shape of the cells of the produced honeycomb molded bodies. Evaluation was made as to whether or not the desired shape was achieved with no parched state present in cell wall surface, no cracks, no holes or fissures on portions of the cell walls, or no cell cut-off. Measurement of the amount of warpage on the honeycomb molded bodies was also carried out. Then, specimens having satisfactory outward appearance with no parched state present in cell wall surface, no cracks, no holes or fissures on portions of the cell walls, and no cell cut-off, and with a warpage amount of less than 0.5 mm were evaluated as good products. The results are shown in Table 1.

The measurement of the warpage amount was carried out using a warpage amount measurement jig.

As the warpage-amount measuring jig, the following was used: a straight rectangular block which has a length of roughly the same as the full length of the molded body; contact members of identical thickness disposed on both ends of this block; and a scale, which is slidable in the direction perpendicular to the longitudinal direction of the above-mentioned block, installed at the center of this block. At the time of measurement, the above-mentioned contact members were made to contact near both ends of the molded body, a scale for measuring warpage amount was then moved toward the molded body, and the warpage amount was measured by reading the amount of movement of the scale when the above-mentioned scale contacted the molded body.

(Examples 2 to 4)

Except that the time period of storing the wet mixture inside of the storage portion 31A was changed to 1, 2 and 3 hours respectively, preparation of the wet mixture, measurement of the moisture contents of the wet mixture of before and after conveyance, measurement of the value of the pressure during extrusion molding, production of the honeycomb structure, and evaluation were carried out in the same manner as in Example 1. The results are shown in Table 1.

(Example 5)

Except that the conveyer apparatus shown in Fig. 1, but not comprising partition member 38, was used, preparation of the wet mixture, measurement of the moisture contents of the wet mixture of before and after conveyance, measurement of the value of the pressure during extrusion molding, production of the honeycomb structure, and evaluation were carried out in the same manner as in Example 4. The results are shown in Table 1.

(Comparative Examples 1 to 4)

Except that a conveyer apparatus identical to the conveyer apparatus used in Example 1, but not comprising casing 33 and partition member 38, was used in the conveyance process to carry out conveyance, and the time period of storing the wet mixture inside of the storage portion 31A was changed, preparation of the wet mixture, measurement of the moisture contents of the wet mixture of before and after conveyance, measurement of the value of the pressure during extrusion molding, production of the honeycomb structure, and evaluation were carried out using the same method as in Example 1. The results are shown in Table 1.

(Reference Examples 1 and 2)

Except that setting the amount of water blended during preparation of the wet mixture to the amount shown in Table 1, thereby setting the moisture content of the wet mixture before conveyance to 9.9% by weight and 20.1% by weight, respectively, preparation of the wet mixture, measurement of the moisture contents of the wet mixture of before and after conveyance, measurement of the value of the pressure during extrusion molding, production of the honeycomb structure, and evaluation were carried out in the same manner as in Example 1. The results are shown in Table 1.

[Table 1]

| | Partition member | Casing | Amount of materials besides water (kg) | Amount of water (kg) | Storage time (hour) | Moisture content before conveyance (% by weight) | Measurement result of moisture content after conveyance | | Pressure during molding (Mpa) | Appearance defect | Occurrence of warpage |
|---|---|---|---|---|---|---|---|---|---|---|---|
| | | | | | | | Moisture content after conveyance (% by weight) | Rate of moisture content change between before and after conveyance (%) | | | |
| Example 1 | present | present | 387 | 59.88 | <0.5 | 13.40 | 13.37 | -0.2 | 5.8 | none | 0/10 |
| Example 2 | present | present | 387 | 59.88 | 1 | 13.40 | 13.31 | -0.7 | 5.8 | none | 0/10 |
| Example 3 | present | present | 387 | 59.88 | 2 | 13.40 | 13.15 | -1.9 | 6.1 | none | 0/10 |
| Example 4 | present | present | 387 | 59.88 | 3 | 13.40 | 13.06 | -2.5 | 6.1 | none | 0/10 |
| Example 5 | absent | present | 387 | 59.88 | 3 | 13.40 | 13.00 | -3.0 | 6.2 | none | 0/10 |
| Comparative Example 1 | absent | absent | 387 | 59.88 | 1 | 13.40 | 12.97 | -3.2 | 6.7 | occurred | 0/10 |
| Comparative Example 2 | absent | absent | 387 | 59.88 | 2 | 13.40 | 12.92 | -3.6 | 6.8 | occurred | 0/10 |
| Comparative Example 3 | absent | absent | 387 | 59.88 | 3 | 13.40 | 12.81 | -4.4 | 6.8 | occurred | 0/10 |
| Comparative Example 4 | absent | absent | 387 | 59.88 | 6 | 13.40 | 12.11 | -9.6 | 7.2 | occurred | 0/10 |
| Reference Example 1 | present | present | 387 | 42.50 | 1 | 9.90 | 9.82 | -0.8 | 7.7 | occurred | 0/10 |

(continued)

| | Partition member | Casing | Amount of materials besides water (kg) | Amount of water (kg) | Storage time (hour) | Moisture content before conveyance (% by weight) | Measurement result of moisture content after conveyance | | Pressure during molding (Mpa) | Appearance defect | Occurrence of warpage |
|---|---|---|---|---|---|---|---|---|---|---|---|
| | | | | | | | Moisture content after conveyance (% by weight) | Rate of moisture content change between before and after conveyance (%) | | | |
| Reference Example 2 | present | present | 387 | 97.30 | 1 | 20.20 | 20.02 | -0.9 | 3.4 | none | 10/10 |

Extrusion molding conditions: 4000 mm/min and 5.8 MPa
Temperature of the room where the conveyer apparatus is placed: 20°C

From the experiment results shown in Table 1, it is shown that in Examples 1 to 5 using the conveyer apparatus 30 according to the present invention, rate of moisture content change of the wet mixture between before and after conveyance is as extremely small as -0.2 to -3.0%, and thus it is possible to prevent drying of the wet mixture between before and after conveyance.

Also, the value of the pressure during molding in Examples 1 to 5 neared the set value of the molding apparatus, 5.8 MPa.

Comparing these measurement results with the evaluation of the molded body product, in Examples 1 to 5 in which the rate of moisture content change of the wet mixture between before and after conveyance is within -3.0%, there were no occurrences of appearance defect (parched state on cell wall surfaces, cracks, holes or fissures on portions of cell wall, or cell cut-off), and no occurrences of warpage.

From this it is understood that keeping the rate of moisture content change of the wet mixture between before and after conveyance to 3.0% or less provides favorable extrusion conditions, making it possible to prevent occurrences of appearance defect and warpage.

More specifically, by carrying out a conveyance process to convey a wet mixture using the conveyer apparatus according to the present invention, it is possible to prevent the occurrence of cracks, cell cut-off, and the like caused by the drying of the wet mixture.

In Comparative Examples 1 to 4, the rate of moisture content change of the wet mixture between before and after conveyance is as large as -3.2% to -9.6%, and the value of the pressure during molding was in the range of 6.8 to 7.2 MPa, quite higher than the set value of the molding apparatus, 5.8 MPa.

Also, in Comparative Examples 1 and 2, there was some occurrence of appearance defect in the molded body specimens, occurrence of a parched state on cell wall surfaces, cracks, and fissures on portions of cell wall, while there was no cell cut-off.

In contrast to this, in the Comparative Examples 3 and 4, appearance defect occurred, namely, a parched state on cell wall surfaces, cracks, fissures on portions of cell wall, and cell cut-off.

From this it is thought that an appearance defect occurs in the following manner:

First, the rate of moisture content change increases, that is, the moisture content of the wet mixture becomes small due to drying, and the surface of the cell wall falls into a parched state. This is thought to happen because the bond between the ceramic particles and the organic binder powder comes to weaken.

When the rate of moisture content change further increases, and the moisture content of the wet mixture becoming even smaller, it is thought that cracks, holes, and fissures come to form at portions of the surface that are in a parched state.

Furthermore, when the rate of moisture content change increases even more, the moisture content of the wet mixture becoming yet even smaller, it is thought that cell cut-off will then occur.

Also, the rise in the value of the pressure during molding is thought to happen due to dried raw material becoming difficult to be extruded, and it is thought that the occurrence of appearance defect is caused by these improper molding conditions.

From this, it is clear that such conveyance processes are unsuitable to be used as conveyance processes.

Also, as shown in Reference Example 1, in a case in which the moisture content of the wet mixture after conveyance is 10% by weight or less, although the rate of moisture content change of the wet mixture between before and after conveyance is small, because the moisture content of the wet mixture is small itself, the value of the pressure during molding becomes as high as 7.7 MPa and extrusion molding is thereby carried out under unsuitable extrusion conditions, which is though to be the cause of the appearance defects. From this it is understood that it is desirable for the moisture content of the wet mixture after conveyance to be 10% by weight or more.

Moreover, as shown in Reference Example 2, in a case in which the moisture content of the wet mixture after conveyance is 20% by weight or more, although the rate of moisture content change of the wet mixture between before and after conveyance is small, because the moisture content of the raw molded body after conveyance is high, it becomes difficult for the raw molded body to retain a constant shape until it is dried, and thereby warpage occurs. From this it is understood that it is desirable for the moisture content of the wet mixture after conveyance to be 20% by weight or less.

Also, if the value of the pressure during molding becomes high, this will make the die easily prone to ablation thereby degrading its durability. In consideration of the durability of the die, it is desirable that molding be carried out at a pressure value close to the set value of the molding apparatus.

BRIEF DESCRIPTION OF THE DRAWINGS

Fig. 1 is a cross sectional view schematically showing an example of a conveyer apparatus according to the present disclosure.

Fig. 2 is a cross sectional view schematically showing another example of a conveyer apparatus according to the present disclosure.

Fig. 3-1(a) is a plan view schematically showing an example of a conveyer constituting a conveyer apparatus according to the present disclosure.

Fig. 3-1(b) is a cross sectional view of Fig. 3-1(a).

Fig. 3-2 (a) is a plan view schematically showing another example of a conveyer constituting a conveyer apparatus according to the present disclosure.

Fig. 3-2(b) is a cross sectional view of Fig. 3-2(a).

Fig. 4 is a cross sectional view schematically showing an example of an extrusion molding apparatus used in the extrusion molding process.

Fig. 5 is a cross sectional view schematically showing an area at which a measurement of the value of the pressure during extrusion molding is taken.

Fig. 6 is a perspective view schematically showing an example of a honeycomb structure.

Fig. 7 (a) is a perspective view schematically showing a honeycomb fired body constituting a honeycomb structure.

Fig. 7 (b) is an A-A line cross sectional view of Fig. 7 (a).

EXPLANATION OF SYMBOLS

| | |
|---|---|
| 30, 50 | Conveyer Apparatus |
| 31a, 31b, 51 | Storage Portion |
| 32, 52 | Conveyer Portion |
| 33, 53 | Casing |
| 35, 55A, 55B | Belt Conveyer |
| 38, 58 | Partition Member |
| 65, 75 | Conveyer |
| 130 | Honeycomb Structure |
| 140 | Honeycomb fired Body |
| 141 | Cell |
| 143 | Cell Wall |
| 220 | Extrusion molding apparatus |

**Claims**

1. A method for manufacturing a honeycomb structure (130) comprising a honeycomb fired body (140) comprising:

   carrying out a conveyance process for conveying a wet mixture containing wet mixed inorganic powders to an extrusion molding process;
   preparing by extrusion molding a pillar-shaped honeycomb molded body (140) in which a multiplicity of cells (141) are placed in parallel with one another in the longitudinal direction with a cell wall (143) therebetween; and
   firing said honeycomb molded body,
   wherein
   in said conveyance process, said wet mixture is conveyed to an extrusion molding apparatus (220) by a conveyer apparatus (30, 50) comprising: a conveyer portion (32, 52) having disposed therein a conveyer (35, 55A, 55B, 65, 75) configured to convey a wet mixture; **characterized in that**
   in said conveyer apparatus said conveyer portion comprises a casing (33, 53) to prevent the moisture contained in the air within the casing from moving out of the casing;

   and a partition member (38, 58) configured to partition off the interior of the casing (33, 53) near the end portion of the downstream side of the conveyer (35, 55A, 55B), so that the rate of moisture content change of said wet mixture between before and after conveyance is 3% or less.

2. The method for manufacturing a honeycomb structure according to claim 1,
   wherein

said conveyer apparatus further comprising:

a storage portion (31A, 31B, 51) for temporarily storing said wet mixture.

3. The method for manufacturing a honeycomb structure according to claim 1 or 2, wherein said conveyor portion (32, 52) comprises a belt conveyer (35,55A,55B,69) disposed inside of said casing.

4. The method for manufacturing a honeycomb structure according to claim 1, wherein a plurality of said partition members (38, 58) is disposed over a conveyance path for the wet mixture.

5. The method for manufacturing a honeycomb structure according to any of claims 1 to 4,
wherein
the moisture content of said wet mixture is in the range of 10 to 20% by weight after conveyance.

6. The method for manufacturing a honeycomb structure according to any one of claims 1-5, wherein the partition member (38, 58) is able to rotate over a prescribed angle around a shaft (38a, 58a) which is disposed on a face of a top plate of the casing (33, 53).

7. The method for manufacturing a honeycomb structure according to any one of claims 1-6, wherein the partition member (38, 58) is of a fluorine resin or a metal material.

8. The method for manufacturing a honeycomb structure according to any one of claims 1-7, wherein the partition member (38, 58) is of a material having bendability.

9. The method for manufacturing a honeycomb structure according to any one of claims 1-8, wherein the wet mixture is conveyed in a state in which the end portion of the partition member (38, 58) is in contact with the surface of the wet mixture.

**Patentansprüche**

1. Verfahren zur Herstellung einer Wabenstruktur (130), welche einen gebrannten Wabenkörper (140) umfasst, das umfasst:

Ausführen eines Transportprozesses zum Transportieren einer feuchten Mischung, welche feuchte anorganische Pulver enthält, an einen Strangpressprozess;
Herstellen eines säulenförmigen ausgeformten Wabenkörpers (140), in dem eine Mehrzahl von Zellen (141) parallel zueinander in der Längsrichtung mit einer Zellwand (143) dazwischen angeordnet sind, durch Strangpressen; und Brennen des ausgeformten Wabenkörpers,
bei dem
in dem Transportprozess die feuchte Mischung zu einer Strangpressvorrichtung (220) mittels einer Transportvorrichtung (30, 50) übertragen wird, die umfasst:

einen Transportabschnitt (32, 42), in dem eine Transporteinheit (35, 55A, 55B, 65, 75) angeordnet ist, die aufgebaut ist, um eine feuchte Mischung zu transportieren;

**dadurch gekennzeichnet, dass**
in der Transportvorrichtung der Transportabschnitt ein Gehäuse (33, 53) zur Vermeidung, dass die Feuchtigkeit, welche in der Luft in dem Gehäuse vorhanden ist, sich aus dem Gehäuse heraus bewegt; und
ein Trennelement (38, 58) umfasst, das aufgebaut ist, um den Innenbereich des Gehäuses (33, 53) in der Nähe des Endabschnitts der Stromabwärtsseite der Transporteinheit (35, 55A, 55B) so abzutrennen, dass die Änderungsrate des Feuchtigkeitsinhalts der feuchten Mischung zwischen vor und nach dem Transport 3% oder kleiner ist.

2. Verfahren zur Herstellung einer Wabenstruktur nach Anspruch 1, bei der
die Transportvorrichtung ferner umfasst:

einen Lagerabschnitt (31A, 31B, 51) zum vorübergehenden Lagern der feuchten Mischung.

**3.** Verfahren zur Herstellung einer Wabenstruktur nach Anspruch 1 oder 2, bei dem der Transportabschnitt (32, 52) eine Bandtransporteinheit (35, 55A, 55B, 69) umfasst, die in dem Gehäuse angeordnet ist.

**4.** Verfahren zur Herstellung einer Wabenstruktur nach Anspruch 1, bei dem eine Mehrzahl der Trennelementen (30, 50) über einem Transportweg für die feuchte Mischung angeordnet ist.

**5.** Verfahren zur Herstellung einer Wabenstruktur nach einem der Ansprüche 1 bis 4, bei dem der Feuchtigkeitsinhalt der feuchten Mischung sich nach dem Transport im Bereich von 10 bis 20 Gew.-% befindet.

**6.** Verfahren zur Herstellung einer Wabenstruktur nach einem der Ansprüche 1 bis 5, bei dem das Trennelement (38, 58) im Stande ist, sich um einen bestimmten Winkel um eine Welle (38a, 58a) zu drehen, die auf einer Fläche einer oberen Platte des Gehäuse (33, 53) angeordnet ist.

**7.** Verfahren zur Herstellung einer Wabenstruktur nach einem der Ansprüche 1 bis 6, bei dem das Trennelement (38, 58) aus einem Fluorharz oder einem Metallmaterial aufgebaut ist.

**8.** Verfahren zur Herstellung einer Wabenstruktur nach einem der Ansprüche 1 bis 7, bei dem das Trennelement (38, 58) aus einem biegsamen Material aufgebaut ist.

**9.** Verfahren zur Herstellung einer Wabenstruktur nach einem der Ansprüche 1 bis 8, bei dem die feuchte Mischung in einem Zustand transportiert wird, in dem der Endabschnitt des Trennelements (38, 58) sich mit der Oberfläche der feuchten Mischung in Kontakt befindet.


**Revendications**

**1.** Procédé pour fabriquer une structure en nid d'abeilles (130) comprenant un corps cuit en nid d'abeilles (140) comprenant :

l'exécution d'un processus de transport pour transporter un mélange mouillé contenant des poudres inorganiques mélangées mouillés vers un processus de moulage par extrusion ;
la préparation par moulage par extrusion d'un corps moulé en nid d'abeilles en forme de colonne (140) dans lequel une multiplicité de cellules (141) sont placées parallèlement les unes aux autres dans la direction longitudinale avec une paroi cellulaire (143) entre elles ; et
la cuisson dudit corps moulé en nid d'abeilles,
dans lequel
dans ledit processus de transport, ledit mélange mouillé est transporté vers un appareil de moulage par extrusion (220) par un appareil convoyeur (30, 50) comprenant : une partie formant convoyeur (32, 52) ayant disposé en son sein un convoyeur (35, 55A, 55B, 65, 75) configuré pour transporter un mélange mouillé; **caractérisé en ce que**
dans ledit appareil convoyeur, ladite partie formant convoyeur comprend une enveloppe (33, 53) pour empêcher l'humidité contenue dans l'air à l'intérieur de l'enveloppe de se déplacer en dehors de l'enveloppe ;
et un élément formant cloison (38, 58) configuré pour cloisonner l'intérieur de l'enveloppe (33, 53) près de la partie d'extrémité du côté aval du convoyeur (35, 55A, 55B), de sorte que le taux de changement de teneur en humidité dudit mélange mouillé entre avant et après le transport est de 3 % ou moins.

**2.** Procédé pour fabriquer une structure en nid d'abeilles selon la revendication 1,
dans lequel
ledit appareil convoyeur comprend en outre :

une partie de stockage (31A, 31B, 51) pour stocker temporairement ledit mélange mouillé.

**3.** Procédé pour fabriquer une structure en nid d'abeilles selon la revendication 1 ou 2, dans lequel ladite partie formant convoyeur (32, 52) comprend un convoyeur à courroie (35, 55A, 55B, 65) disposé à l'intérieur de ladite enveloppe.

**4.** Procédé pour fabriquer une structure en nid d'abeilles selon la revendication 1, dans lequel une pluralité desdits éléments formant cloisons (38, 58) sont disposés sur un chemin de transport pour le mélange mouillé.

**5.** Procédé pour fabriquer une structure en nid d'abeilles selon l'une quelconque des revendications 1 à 4, dans lequel
la teneur en humidité dudit mélange mouillé est dans la plage de 10 à 20 % en poids après transport.

**6.** Procédé pour fabriquer une structure en nid d'abeilles selon l'une quelconque des revendications 1 à 5, dans lequel l'élément formant cloison (38, 58) est susceptible de tourner d'un angle prédéterminé autour d'un arbre (38a, 58a) qui est disposé sur une face d'une plaque supérieure de l'enveloppe (33, 53).

**7.** Procédé pour fabriquer une structure en nid d'abeilles selon l'une quelconque des revendications 1 à 6, dans lequel l'élément formant cloison (38, 58) est en résine de fluor ou en une matière métallique.

**8.** Procédé pour fabriquer une structure en nid d'abeilles selon l'une quelconque des revendications 1 à 7, dans lequel l'élément formant cloison (38, 58) est en une matière ayant une aptitude au pliage.

**9.** Procédé pour fabriquer une structure en nid d'abeilles selon l'une quelconque des revendications 1 à 8, dans lequel le mélange mouillé est transporté dans un état dans lequel la partie d'extrémité de l'élément formant cloison (38, 58) est en contact avec la surface du mélange mouillé.

EP 1 847 366 B1

Fig. 1

Fig. 2

Fig. 3-1

(a)

65

65b

65a

(b)

65

66a

65b

66b

65a

Fig. 3-2

(a)

75a  75  75b

(b)

75  75b  76b

76a  75a

Fig. 4

Fig. 5

Fig. 6

Fig. 7

(a)

140

A

142

143

141

A

(b)

140

141

143

142

A-A line cross-section view

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002255353 A
- JP 5131432 A
- US 20020162853 A1
- US 4164597 A
- EP 1803666 A